## Europäisches Patentamt

## European Patent Office

## Office européen des brevets

(19)

(11) Veröffentlichungsnummer: **0 108 300**
**A2**

(12) **EUROPÄISCHE PATENTANMELDUNG**

(21) Anmeldenummer: **83110390.8**

(22) Anmeldetag: **19.10.83**

(51) Int. Cl.³: **H 01 S 3/03**
**H 01 S 3/04**

(30) Priorität: **05.11.82 DE 3240836**

(43) Veröffentlichungstag der Anmeldung:
**16.05.84 Patentblatt 84/20**

(84) Benannte Vertragsstaaten:
**AT BE CH DE FR GB IT LI**

(71) Anmelder: **Deutsche Forschungs- und Versuchsanstalt für Luft- und Raumfahrt e.V.**

**D-5300 Bonn(DE)**

(72) Erfinder: **Gehringer, Erwin**
**Asternstrasse 15**
**D-7030 Böblingen 4(DE)**

(72) Erfinder: **Hügel, Helmut, Dr. Ing. habil.**
**Esseggerstrasse 22**
**D-7032 Sindelfingen(DE)**

(72) Erfinder: **Schock, Wolfram, Dr. Ing.**
**Peterstaler Strasse 28**
**D-7030 Böblingen(DE)**

(72) Erfinder: **Schrenk, Wilhelm**
**Böblinger Strasse 12 a**
**D-7000 Stuttgart(DE)**

(74) Vertreter: **Hoeger, Stellrecht & Partner**
**Uhlandstrasse 14c**
**D-7000 Stuttgart 1(DE)**

(54) **Strömungskanal für einen quergeströmten Gaslaser.**

(57) Um bei einem Strömungskanal für einen quergeströmten Gaslaser mit in gegenüberliegenden Wänden des Kanals angeordneten Elektroden zur transversalen Hoch frequenzanregung, die auf der dem Kanal zugewandten Seite aus dielektrischem Material bestehen, welches auf seiner dem Kanal abgewandten Seite eine Metallschicht trägt, wobei die Metallschichten jeweils mit einem Pol einer Spannungsquelle verbunden sind, auch bei großen Breiten eine mechanisch widerstandsfähige Konstruktion zu erreichen, wird vorgeschlagen, daß der Kanal von einem tragenden Gehäuse umgeben ist, das an den die Elektroden haltenden Wänden je eine Aufnahmefläche für die Elektroden aufweist, daß das dielektrische Material als Träger ausgebildet ist und die Metallschicht jeder Elektrode mit einem Dichtrand umgibt, gegenüber dem die Metallschicht in Richtung auf das Kanalinnere zurückgesetzt ist, daß der dielektrische Träger mit seinem Dichtrand abgedichtet an der Aufnahmefläche des Gehäuses anliegt und in dieser Lage am Gehäuse gehalten ist und daß die metallische Beschichtung auf ihrer dem dielektrischen Träger abgewandten Seite frei liegt.

Fig. 1

- 1 -

Anmelderin: Deutsche Forschungs- und
Versuchsanstalt für Luft-
und Raumfahrt e.V.
5300   Bonn

B e s c h r e i b u n g

Strömungskanal für einen quergeströmten Gaslaser

Die Erfindung betrifft einen Strömungskanal für einen quergeströmten Gaslaser mit in gegenüberliegenden Wänden des Kanals angeordneten Elektroden zur transversalen Hochfrequenzanregung, die auf der dem Kanal zugewandten Seite aus dielektrischem Material bestehen, welches auf seiner dem Kanal abgewandten Seite eine Metallschicht trägt, wobei die Metallschichten jeweils mit einem Pol einer Spannungsquelle verbunden sind.

Eine solche Anordnung ist beispielsweise aus dem US-Patent
3.748 594 bekannt. Die Einkopplung der Hochfrequenzenergie
zur Anregung eines laseraktiven Zustandes in der Gasströmung
ist mit solchen "dielektrischen Elektroden" besonders vorteilhaft, also mit Elektroden, die auf der Strömungsseite mit einer dielektrischen Schicht von der Gasströmung getrennt sind.
Bei einer solchen Anordnung bestimmen die dielektrischen Materialien Konstruktion und den Aufbau des Laserkanals. Da
solche Laser bei Unterdruck betrieben werden (50-200 mb), muß
der Laserkanal so ausgestaltet werden, daß er dem Atmosphärendruck festigkeitsmäßig standhält. Dielektrika mit passenden
elektrischen Daten sind jedoch aufgrund ihrer mechanischen
Eigenschaften nicht geeignet, als selbsttragende Kanalwände
großer Spannweite eingesetzt zu werden, beispielsweise finden als Dielektrika Keramiksubstanzen Verwendung, die nicht
die notwendige mechanische Biegefestigkeit aufweisen. Dies gilt
insbesondere dann, wenn Laser großer Abmessungen in Richtung optischer Achsen gebaut werden sollen, sei es zur Erzielung hoher Laserleistungen, sei es zur Erzielung einer
besonders hohen Strahlqualität.

Andererseits ist eine tragende Ausführung eines Laserkanals
aus Metall nicht ohne Schwierigkeiten möglich, da kapazitive Kopplungen zu Metallteilen einerseits zu unkontrollierten Störentladungen und andererseits zu kapazitiven Nebenschlüssen führen können. Weitere Probleme ergeben sich durch
die erforderliche Wärmeabfuhr aus dem Bereich der Elektroden
selbst sowie aus der Notwendigkeit, zwischen metallischem Laserkanal einerseits und metallischer Beschichtung der dielektrischen Elektrode andererseits eine hohe Gasdichtigkeit herzustellen.
Der Erfindung liegt die Aufgabe zugrunde, eine verbesserte
Konstruktion eines gattungsgemäßen Strömungskanals anzugeben, mit welcher auch Strömungskanäle mit sehr großen Abmessungen in Richtung der optischen Achse herstellbar sind.

Diese Aufgabe wird bei einem Strömungskanal der eingangs beschriebenen Art erfindungsgemäß dadurch gelöst, daß der Kanal von einem tragenden Gehäuse umgeben ist, das an den
die Elektroden haltenden Wänden je eine Aufnahmefläche für
die Elektroden aufweist, daß das dielektrische Material als

- 3 -

Träger ausgebildet ist und die Metallschicht jeder Elektrode
mit einem Dichtrand umgibt, gegenüber dem die Metallschicht
in Richtung auf das Kanalinnere zurückgesetzt ist, daß der
dielektrische Träger mit seinem Dichtrand abgedichtet an der
Aufnahmefläche des Gehäuses anliegt und in dieser Lage am
Gehäuse gehalten ist und daß die metallische Beschichtung
auf ihrer dem dielektrischen Träger abgewandten Seite frei
liegt.

Diese Konstruktion ermöglicht es, ein stabiles Gehäuse beliebiger Breite herzustellen, das beispielsweise aus Metall
besteht, ohne daß Störungen oder eine kapazitive Kopplung zwischen Gehäuse und metallischer Beschichtung der Elektroden auftreten. Vor allem ist es mit dieser Ausgestaltung möglich, dem
Gehäuse die gesamten tragenden Funktionen zu übertragen; dadurch
sind keine zusätzlichen Stützen etc. im Innern des Strömungskanals notwendig, so daß die Strömung ungestört bleibt.

Bei einer bevorzugten Ausführungsform der Erfindung ist vorgesehen, daß das Gehäuse mindestens eine auf die Metallschicht des Trägers gerichtete Durchbrechung aufweist, wobei
vorzugsweise die Ausdehnung der Durchbrechung der der Metallschicht entspricht. Bei dieser vorteilhaften Ausgestaltung
ist das Gehäuse gerade in dem der Metallschicht gegenüberliegenden Bereich entfernt, so daß durch diese Ausgestaltung eine kapazitive Kopplung zwischen Gehäuse und metallischer Beschichtung weiter herabgesetzt wird.

Weiterhin wird durch das Freilegen der Metallschicht die Kühlung der Elektrode erleichtert. Günstig ist es, wenn durch

- 4 -

die Durchbrechungen hindurch ein Kühlmedium gegen die Metallschicht gerichtet ist, beispielsweise ein Kühlluftstrom.

Es kann dabei vorgesehen sein, daß die Durchbrechungen mittels eines Einsatzes verschlossen sind, der zwischen sich und
der Metallschicht einen Strömungskanal für ein Kühlmedium
freiläßt und Ein- und Auslaßöffnungen für ein Kühlmedium aufweist.

Günstig ist es, wenn der Einsatz aus Kunststoff besteht.

Bei einer weiteren bevorzugten Ausführungsform sind quer zur
Gasströmungsrichtung und/oder parallel zur Gasströmungsrichtung mehrere Träger nebeneinander angeordnet. Es ist durch
eine solche Modulbauweise möglich, die Dimension der aktiven
Elektrodenfläche quer zur Strömungsrichtung und gegebenenfalls auch in Strömungsrichtung wunschgemäß zu verändern, dazu genügt es, die Zahl der quer zur Strömungsrichtung bzw. in
Richtung der optischen Achse nebeneinanderliegenden Träger bzw.
der in Strömungsrichtung hintereinanderliegenden Träger zu variieren.
Besonders vorteilhaft ist es, wenn die Träger von einem dielektrischen Halter abgestützt und an der Aufnahmefläche des
Gehäuses gehalten sind. Der Halter kann dabei an seiner dem
Kanal zugewandten Seite eben sein und mit der ebenfalls ebenen Unterseite des Trägers fluchten. Halter und Träger bilden somit gemeinsam eine ebene, dielektrische Begrenzungswand für den Strömungskanal.

Es kann weiterhin vorgesehen sein, daß der Halter an seiner dem Kanal abgewandten Seite eben ist und mit dem ebenfalls ebenen Dichtrand des Trägers fluchtet. Halter und Träger gemeinsam bilden somit eine ebene Dichtfläche, die an der Aufnahmefläche der Gehäusewand anliegt.

Der Halter ist vorzugsweise am Gehäuse befestigt, beispielsweise durch Verschrauben. Es kann vorgesehen sein, daß von dem Halter mehrere Träger unterstützt werden.

Bei der bevorzugten Ausführungsform ist vorgesehen, daß der Träger längs seines Dichtrandes mit der Aufnahmefläche dichtend verklebt ist, bei einer anderen Ausführungsform kann längs dieser Dichtfläche auch ein O-Ring zwischen Anlagefläche und Dichtrand eingelegt sein.

Besonders vorteilhaft ist es, wenn der Träger aus einem dielektrischen Material mit geringem Verlustwinkel und hoher Dielektrizitätskonstanten besteht, z.B. aus $Al_2O_3$. Außerdem sollte dieses Material hohe mechanische und thermische Festigkeit aufweisen, denn der Träger kommt mit der Entladung unmittelbar in Kontakt. Dagegen kann zur Herstellung der die Träger aufnehmenden Halter ein dielektrisches Material verwendet werden, an das hinsichtlich Verlustwinkel und Dielektrizitätskonstante geringere Anforderungen gestellt werden können.

Die nachfolgende Beschreibung bevorzugter Ausführungsformen der Erfindung dient im Zusammenhang mit der Zeichnung der näheren Erläuterung. Es zeigen:

Fig.    1    eine schaubildliche Ansicht eines Strömungskanalsausschnittes im Bereich der
             Gasentladung;

Fig.    2    eine schaubildliche Draufsicht auf ein
             Teilstück eines Halters mit eingesetzten
             Trägern und

Fig.    3    einen Längsschnitt eines abgewandelten
             Ausführungsbeispieles eines am Gehäuse
             gehaltenen Trägers mit einem die Durchbrechung des Gehäuses verschließenden
             Einsatz.

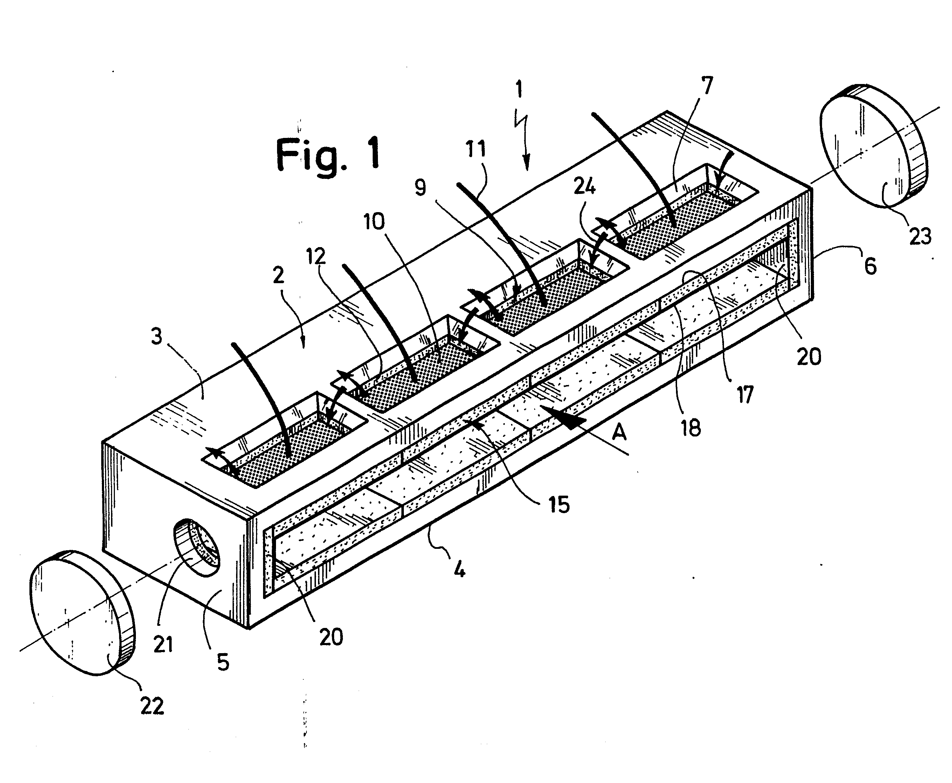

In der Fig. 1 ist ein kurzer Abschnitt 1 eines Strömungskanals eines Gasströmungslasers dargestellt. Dieser Abschnitt
1 umfaßt ein kräftiges Gehäuse 2 mit einer ebenen, oberen
Wand 3 sowie einer ebenfalls ebenen, unteren Wand 4. Die beiden Wände 3 und 4 sind durch zwei senkrecht zu diesen verlaufende Seitenwände 5 und 6 miteinander verbunden, an der
Vorderseite und an der Rückseite ist das Gehäuse 2 offen.

Das Gehäuse 2 ist tragend ausgebildet und besteht vorzugsweise aus einem formstabilen, belastbaren Metall, so daß
es die Druckkräfte aufzunehmen vermag, die von außen auf das
Gehäuse wirken, wenn der vom Gehäuse umgebene Strömungskanal
auf einen wesentlich niedrigeren Druck evakuiert ist.

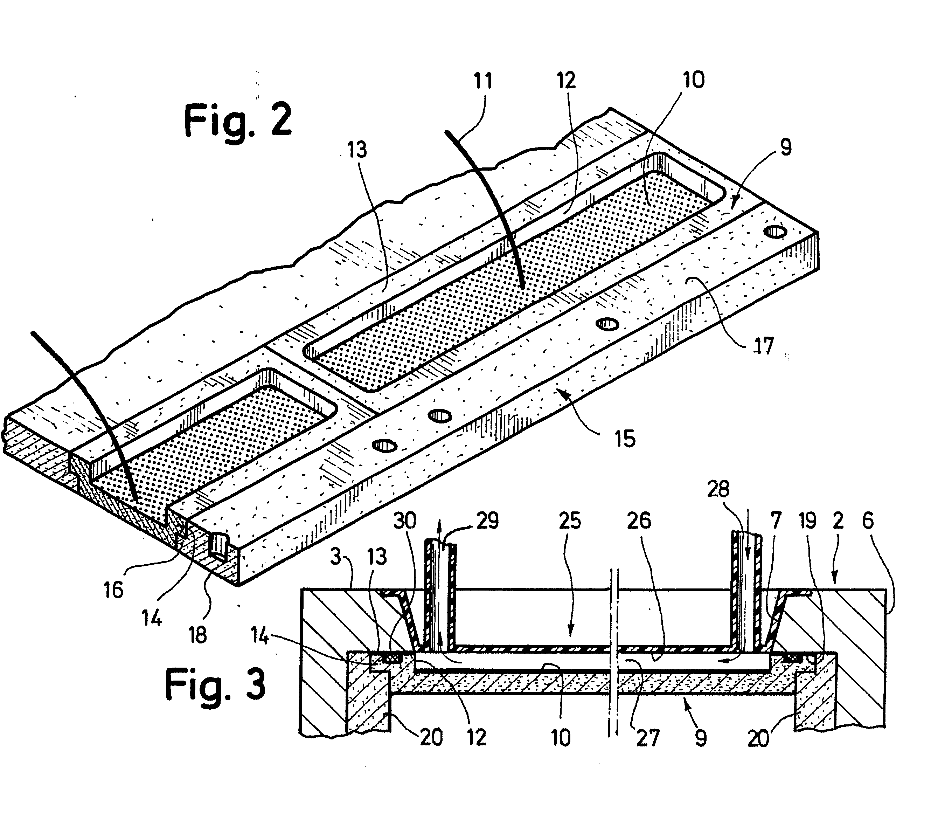

In der oberen Wand 3 und in der unteren Wand 4 (in Fig. 1
nicht sichtbar) sind nebeneinander mehrere rechteckförmige
Durchbrüche 7 angeordnet, die sich in oberer und unterer Wand paarweise gegenüberliegen. Die dem von dem Gehäuse 2 umgebenen Strömungskanal zugewandte Innenseite der oberen und unteren Wand ist eben ausgeführt und bildet eine die Durchbrüche 7 umgebende Aufnahmefläche 19 für Elektroden, deren Aufbau im folgenden anhand der Fig. 2 näher erläutert wird.

Jede Elektrode umfaßt einen trog- oder wannenförmigen Träger 9 aus einem dielektrischen Werkstoff, beispielsweise aus einer $Al_2O_3$-Keramik. Am ebenen Boden des wannenförmigen Trägers ist eine dünne Metallschicht 10 aufgebracht, die eine flächige Elektrode bildet und über einen Anschlußdraht 11 mit einer in der Zeichnung nicht dargestellten Spannungsquelle verbunden ist. Die Metallschicht kann z.B. eine eingebrannte Silberbeschichtung sein, die durch Plasmaspritzung aufgebracht worden ist und eine Stärke zwischen 100 und 200 Mikrometern hat.

Die wannenförmige Vertiefung mit der Metallschicht 10 am Boden wird von einer senkrechten Wand 12 umgeben, deren Oberseite als ebener Dichtrand 13 ausgebildet ist. Die Wand 12 ist angrenzend an den Dichtrand 13 in der Art eines Flansches 14 verbreitert, wie sich aus der Schnittdarstellung der Fig. 2 ergibt. Durch die Anordnung der Metallschicht 10 am Boden des wannenförmigen Trägers befindet sich die Metallschicht 10 in einer Ebene, die parallel zu der vom Dichtrand definierten Ebene verläuft, wobei jedoch die Ebene der Metallschicht 10 gegenüber der Ebene des Dichtrandes 13 zurückgesetzt ist.

Wie aus Fig. 2 weiterhin ersichtlich ist, werden die Träger 9 von einem Halter 15 getragen. Dieser Halter 15 besteht ebenfalls aus einem dielektrischen Material, beispielsweise aus einer bearbeitbaren Glaskeramik, und ist im wesentlichen plattenförmig aufgebaut. Auf der dem Träger zugewandten Seite steht an der Unterseite des Halters 15 ein Flansch 16 hervor, der unter den Flansch 14 des Trägers greift und diesen dadurch unterstützt. Derartige Halter 15 sind an beiden Längsseiten der Träger 9 angeordnet, so daß die Träger in den Haltern eingehängt sind. Die Dicke der Halter 15 entspricht dabei der Gesamthöhe der Träger, so daß die ebene Oberseite 17 der Halter 15 mit dem ebenen Dichtrand 13 der Träger fluchtet, während die ebenfalls ebene Unterseite der Halter 15 mit der ebenen Unterseite der Träger 9 fluchtet.

Die Halter können breiter ausgebildet sein als die Träger, so daß ein Halter mehrere nebeneinanderliegende Träger aufnehmen kann, wie dies in Fig. 2 angedeutet ist. Es ist aber auch möglich, die Breite der Halter der Träger anzupassen.

Die Träger sind mittels der Halter an der Innenseite der oberen Wand 3 und der unteren Wand 4 des Gehäuses 2 derart gehalten, daß die Metallschicht 10 jedes Trägers 9 mit einem Durchbruch 7 in der Wand des Gehäuses fluchtet und der Dichtrand 13 eines Trägerelementes an der Innenseite der die Durchbrüche 7 umgebenden, ebenen Gehäusewand anliegt, die in diesem Bereich die Aufnahmefläche 19 bildet.

Wie aus der Darstellung der Fig. 1 deutlich wird, entsprechen sich die flächigen Ausdehnungen der Durchbrüche und der Metallschichten 10, so daß die Metallschichten 10 über ihre gesamte Ausdehnung frei liegen.

Die Träger 9 werden an den Wänden 3 und 4 des Gehäuses durch
die Halter 15 gehalten, die beispielsweise mit den Wänden 3
und 4 verschraubt sein können. Wesentlich ist, daß die Dichtränder 13 an den Aufnahmeflächen 19 der Wände 3 und 4 dicht
anliegen. Dies kann beispielsweise dadurch erreicht werden,
daß die Träger längs ihrer Dichtränder mit den Aufnahmeflächen verklebt sind, bei einer abgewandelten Ausführungsform
ist zwischen Dichtrand und Aufnahmefläche ein Dichtring 30 eingelegt (Fig. 3).

Die Seitenwände 5 und 6 des Gehäuses 2 sind an ihrer Innenseite mit einer dielektrischen Schicht 20 belegt (Fig. 1),
so daß der den Strömungskanal bildende Innenraum des Gehäuses 2 allseitig durch dielektrisches Material von dem metallischen Gehäuse 2 abgeschirmt ist.

In den beiden Seitenwänden 5 und 6 sind Öffnungen 21 angeordnet, durch die eine Strahlung aus dem Inneren des Strömungskanals nach außen austreten und in an sich bekannter Weise
an außerhalb des Strömungskanals angeordneten Spiegeln 22 und
23 reflektiert werden kann, so daß der Raum zwischen den beiden Spiegeln 22 und 23 einen optischen Resonator bildet.

Wie in Fig. 1 durch die Pfeile 24 angedeutet, können die offen liegenden Metallschichten 10 durch einen Kühlmedienstrom,
beispielsweise einen Kühlluftstrom, gekühlt werden, der von
außen gegen die Metallschicht 10 gerichtet wird.

Bei einem abgewandelten Ausführungsbeispiel, das in Fig. 3
dargestellt ist, werden die Durchbrüche 7 von einem Kunststoffeinsatz 25 verschlossen, der von der Außenseite her in die Durchbrüche eingedrückt ist und zwischen seiner Unterseite 26 und der Metallschicht 10 einen schmalen Strömungsspalt 27 bildet, der über einen Einlaß 28 mit einer Kühlmittelquelle in Verbindung steht. Das durch den Einlaß 28 in den Spalt 27 einströmende Kühlmedium verläßt den Strömungsspalt 27 durch einen Auslaß 29. Auf diese Weise wird ein definierter Strömungsweg für das Kühlmedium geschaffen, der eine effektive Kühlung der Metallschicht gewährleistet.

Im Betrieb wird der in Fig. 1 dargestellte Abschnitt 1 in den Strömungskanal einer Laseranordnung eingesetzt, beispielsweise stromabwärts einer Expansionsdüse, die einen in Richtung des Pfeiles A in Fig. 1 fließenden Gasstrom auf die erforderliche Geschwindigkeit bringt. Beim Durchtritt des strömenden Gases durch den Abschnitt 1 wird das Gas zwischen den durch die Metallschichten 10 gebildeten, einander gegenüberliegenden Elektrodenpaaren angeregt und dadurch befähigt, eine Laserstrahlung auszustrahlen, die aus dem durch die Spiegel 22 und 23 gebildeten optischen Resonator in bekannter Weise ausgekoppelt werden kann.

Die Träger befinden sich während des Betriebes im Bereich der Anregung, in dem normalerweise eine Entladung stattfindet, und müssen daher sowohl in mechanischer als auch in thermischer Hinsicht hohen Belastungen standhalten. Da die Träger jedoch eine relativ geringe Ausdehnung haben, ist dies auch mit einem Keramikmaterial möglich, das für diesen Zweck geeignet ist, beispielsweise einer Aluminiumoxydkeramik. Ferner muß das Trägermaterial in diesem Bereich einen geringen

- 4 -

Verlustwinkel und eine hohe Dielektrizitätskonstante aufweisen, wie dies ebenfalls durch eine Aluminiumoxydkeramik
erfüllt wird.

Dagegen ist es nicht notwendig, daß das Haltermaterial ähnliche elektrische Eigenschaften zeigt, hier können daher
billigere Materialien verwendet werden, beispielsweise bearbeitbare Glaskeramik oder andere dielektrische Substanzen
mit hohem Verlustwinkel. Das Haltermaterial hat dabei im
wesentlichen neben der eigentlichen Halterfunktion die Aufgabe, die Hochfrequenzentladung und das Gehäuse zu elektrischentkoppeln.

Durch die modulartige Verwendung der Träger ist es
jederzeit möglich, die effektive Ausdehnung der Elektrode
zu variieren, indem die Zahl der nebeneinander oder in
Strömungsrichtung hintereinander angeordneten Träger geändert wird. Dadurch läßt sich eine solche Laseranordnung
in einfacher Weise skalieren.

0108300

Anmelderin: Deutsche Forschungs- und
Versuchsanstalt für Luft-
und Raumfahrt e.V.
5300 Bonn

P a t e n t a n s p r ü c h e :

1. Strömungskanal für einen quergeströmten Gaslaser mit in
gegenüberliegenden Wänden des Kanals angeordneten Elektroden zur transversalen Hochfrequenzanregung, die auf der
dem Kanal zugewandten Seite aus dielektrischem Material
bestehen, welches auf seiner dem Kanal abgewandten Seite
eine Metallschicht trägt, wobei die Metallschichten jeweils mit einem Pol einer Spannungsquelle verbunden sind,
d a d u r c h   g e k e n n z e i c h n e t , daß der
Kanal von einem tragenden Gehäuse (2) umgeben ist, das
an den die Elektroden haltenden Wänden (3, 4) je eine
Aufnahmefläche (19) für die Elektroden aufweist, daß das
dielektrische Material der Elektrode als Träger (9) ausgebildet ist und die Metallschicht (10) jeder Elektrode mit
einem Dichtrand (13) umgibt, gegenüber dem die Metallschicht
(10) in Richtung auf das Kanalinnere zurückgesetzt ist, daß
der dielektrische Träger (9) mit seinem Dichtrand (13) abgedichtet an der Aufnahmefläche (19) des Gehäuses (2) anliegt
und in dieser Lage am Gehäuse (2) gehalten ist und daß die
Metallschicht (10) auf ihrer dem dielektrischen Träger (9)
abgewandten Seite frei liegt.

- 2 -

2. Strömungskanal nach Anspruch 1, dadurch gekennzeichnet, daß das Gehäuse (2) mindestens eine auf die Metallschicht (10) des Trägers (9) gerichtete Durchbrechung (7) aufweist.

3. Strömungskanal nach Anspruch 2, dadurch gekennzeichnet, daß die Ausdehnung der Durchbrechung (7) der der Metallschicht (10) entspricht.

4. Strömungskanal nach Anspruch 2 oder 3, dadurch gekennzeichnet, daß durch die Durchbrechungen (7) mindestens ein Kühlmedium gegen die Metallschicht (10) gerichtet ist.

5. Strömungskanal nach einem der Ansprüche 2 oder 3, dadurch gekennzeichnet, daß die Durchbrechungen (7) mittels eines Einsatzes (25) verschlossen sind, der zwischen sich und der Metallschicht (10) einen Strömungskanal (27) für ein Kühlmedium freiläßt und Ein- und Auslaßöffnungen (28 bzw. 29) für ein Kühlmedium aufweist.

6. Strömungskanal nach Anspruch 5, dadurch gekennzeichnet, daß der Einsatz (25) aus Kunststoff besteht.

7. Strömungskanal nach einem der voranstehenden Ansprüche, dadurch gekennzeichnet, daß quer zur Gasströmungsrichtung und/oder parallel zur Gasströmungsrichtung mehrere Träger (9) nebeneinander angeordnet sind.

8. Strömungskanal nach einem der voranstehenden Ansprüche, dadurch gekennzeichnet, daß die Träger (9) von einem dielektrischen Halter (15) abgestützt und an der Aufnahmefläche (19) des Gehäuses (2) gehalten sind.

9. Strömungskanal nach Anspruch 8, dadurch gekennzeichnet, daß der Halter (15) an seiner dem Kanal zugewandten Seite (18) eben ist und mit der ebenfalls ebenen Unterseite des Trägers (9) fluchtet.

10. Strömungskanal nach Anspruch 8 oder 9, dadurch gekennzeichnet, daß der Halter (15) an seiner dem Kanal abgewandten Seite (17) eben ist und mit dem ebenfalls ebenen Dichtrand (13) des Trägers (9) fluchtet.

11. Strömungskanal nach einem der Ansprüche 8 bis 10, dadurch gekennzeichnet, daß der Halter (15) am Gehäuse (2) befestigt ist.

12. Strömungskanal nach einem der Ansprüche 8 bis 11, dadurch gekennzeichnet, daß von dem Halter (15) mehrere Träger (9) unterstützt werden.

13. Strömungskanal nach einem der voranstehenden Ansprüche, dadurch gekennzeichnet, daß der Träger (9) aus einem dielektrischen Material mit geringem Verlustwinkel und hoher Dielektrizitätskonstanten besteht, z.B. aus $Al_2O_3$.


14. Strömungskanal nach einem der voranstehenden Ansprüche, dadurch gekennzeichnet, daß der Träger (9) längs seines Dichtrandes (13) mit der Aufnahmefläche (19) dichtend verklebt ist.

-----------------------------

Fig. 1

Fig. 2

Fig. 3

0108300